Europäisches Patentamt

(19) European Patent Office

Office européen des brevets

(11) Publication number: **0 239 046**
**B1**

(12) **EUROPEAN PATENT SPECIFICATION**

(45) Date of publication of the patent specification:
14.11.90

(51) Int. Cl.⁵: **B29C 47/32**
// B29L16/00, B29L23/22

(21) Application number: 87104220.6

(22) Date of filing: 21.03.87

(54) Extrusion die for externally ribbed plastic tubing.

(30) Priority: 25.03.86 US 843516

(43) Date of publication of application:
30.09.87 Bulletin 87/40

(45) Publication of the grant of the patent:
14.11.90 Bulletin 90/46

(84) Designated Contracting States:
AT BE CH DE ES FR GB GR IT LI LU NL SE

(56) References cited:
EP-A- 0 005 104
EP-A- 0 096 957
EP-A- 0 230 055
FR-A- 2 248 140
FR-A- 2 372 689
US-A- 2 859 476
US-A- 3 298 064
US-A- 3 327 038
US-A- 3 891 007
US-A- 4 047 868
US-A- 4 226 580
US-A- 4 394 116

(73) Proprietor: Lupke, Manfred Arno Alfred, 92 Elgin Street,
Thornhill Ontario L3T 1W6(CA)

(72) Inventor: Lupke, Manfred Arno Alfred, 92 Elgin Street,
Thornhill Ontario L3T 1W6(CA)

(74) Representative: Patentanwälte Dipl.-Ing. W. Dahlke
Dipl.-Ing. H.-J. Lippert, Frankenforster Strasse 137,
D-5060 Bergisch Gladbach 1(DE)

## Description

### Background of the invention

The invention relates to an extrusion die for an apparatus producing seamless plastic tubing, particularly, with a smooth inner surface and an annularly ribbed outer surface defined by alternating ribs and grooves, including an extrusion head having a central bore with an opening for receiving an extrudate of a thermoplastic material under pressure therefrom, an elongate nozzle attached to said head and providing a supply passage extending in the longitudinal direction thereof for the delivery of said extrudate to the delivery end thereof, a hollow mandrel placed in said bore in substantially coaxial relation with said nozzle and spaced from the latter to provide a plastic conducting passage extending in the longitudinal direction thereof for the delivery of said extrudate to the delivery end thereof, the nozzle and mandrel defining respectively an annular extrusion orifice of diminishing interior dimensions, through which the extrudate can flow uninterruptedly and form a parison within the nozzle and around the mandrel.

A die of such a type is disclosed in the EP-A 0 005 104. The nozzle and mandrel of known die form an annular extrusion orifice which has an arcuate shape in its longitudinal section. The tangent of this extrusion orifice forms an angle of less than 45° with the longitudinal axis of the die. Furthermore the outer diameter of the mandrel at the delivery end is less than that of the nozzle.

The major drawback of this die is that its mandrel extends substantially beyond the nozzle and forms a large cavity wherein the material is cooled. Therefore less viscous materials (such as polivinyl chloride) are therefore not employable.

Also, the known die does not allow to vary the wall thickness of the tubing.

Other dies of such a type are disclosed in the US-Patents Nos. 3 891 007 and 3 998 579.

### Summary of the invention

The problem underlying the present invention is to provide a simple structure allowing to employ less viscous plastic materials.

This is achieved for a die of the above type by providing the mandrel at said delivery end with a coaxial conical portion with its generatrix forming an angle of 45° and more with the longitudinal axis of said head, the outer diameter of the mandrel at said end being not less than that of the nozzle.

The US-A 3 327 038 discloses an extrusion orifice for producing thermoplastic cellular sheet formed by a nozzle and a mandrel with a conical side having an angle of more than 45° with respect to the longitudinal axis of the die.

Through this extrusion orifice, the thermoplastic cellular sheet is however extruded into the outer space without a further forming of the material between molds. Therefore the delivery end of this die is designed for other purposes thant the present invention.

In a preferred embodyment of the present invention the delivery end has an electrical heater incorporated inside the mandrel.

The radial adjustment of the nozzle with respect to the mandrel is permitted by a centering means mounting the nozzle uniformly spaced around the mandrel and having screws disposed in the head radially, interacting with the lateral surface of the nozzle.

The wall thickness of the tubing may be varied by a threaded adjusting member for adjusting longitudinally the mandrel, effective to vary the size of the extrusion orifice when the mandrel is axially adjusted. Thereby a coupling means, such as a key, spline and the like, interconnecting the mandrel and the head only allows the axial, without rotation, movement of the mandrel.

In addition, the present die allows easy replacement of the nozzles and mandrels for cleaning and for different sizes of the produced tubing.

A more complete appreciation of the present invention and the distinguishing characteristics, objectives and attendant advantages thereof set out herein are more apparent and obvious to one ordinary skilled in the art from the following detailed description, drawings and appended claims.

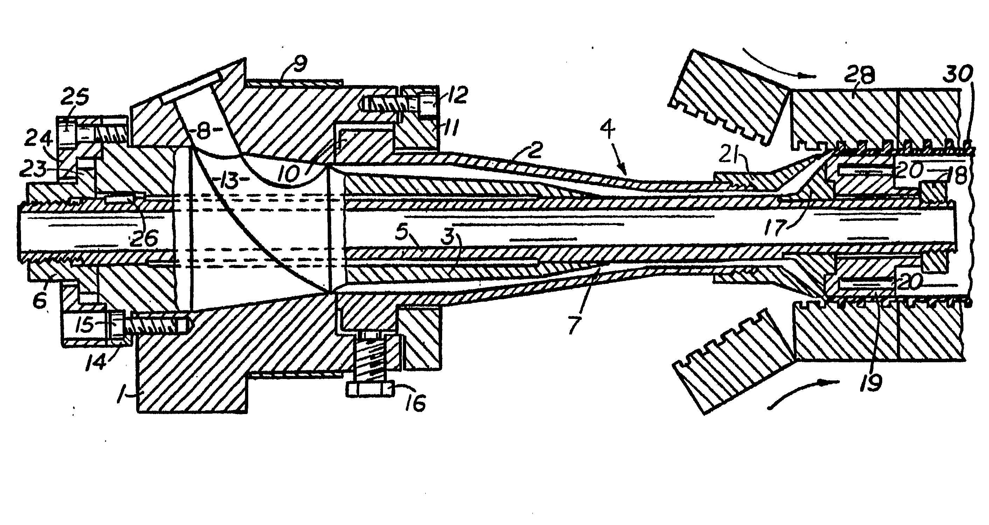

### BRIEF DESCRIPTION OF THE DRAWING

A lone figure is a longitudinal section of the present die for an apparatus producing plastic pipes with a smooth interior and an annularly ribbed exterior.

### DESCRIPTION OF THE PREFERRED EMBODIMENT

Referring now to the drawings, the extrusion die of the present invention for an apparatus producing externally ribbed plastic tubing includes an extrusion head 1, an elongate nozzle 4 with a nozzle member 2, a hallow mandrel 7 with a mandrel member 3 and an elongate hollow carrier 5, a centering means, a threaded adjusting member 6 and a coupling means.

The extrusion head 1 has a central bore with a lateral opening 8 for fluid communication with an extruder (not shown) and for receiving an extrudate of a thermoplastic material under pressure therefrom. The head 1 is provided with a heater 9 and thermal sensors (not shown).

The nozzle member 2 has a flange 10 in its receiving end for clamping the nozzle to the head 1. This is achieved by means of a ring 11 with screws 12 disposed circumferentially around the flange 10. The nozzle member 2 provides a supply passage extending in the longitudinal direction of the nozzle and adapted for the delivery of the extrudate to an extrusion orifice forming the pipe.

The mandrel member 3 is placed in said central bore in substantially coaxial relation with the nozzle member 2 and is spaced from the latter. The lateral surface of the mandrel member has curved slots 13 to which the opening 8 is tangential to provide a gradual transition to a plastic conducting passage extending in the longitudinal direction of the die for the delivery of the extrudate to the extrusion orifice. A free end of the mandrel member 3 has a flange 14 which is fastened to the head 1 with screws 15 circumferentially spaced around the mandrel member 3.

The centering means mounts the nozzle member 2 uniformly spaced around the mandrel member 3 and has centering screws 16 disposed radially in the head 1. The screws 16 interact with the lateral surface of the flange 10 of the nozzle member 2. This permits the radial adjustment of the same with respect to the mandrel member 3.

The carrier 5 is placed within the mandrel member 3 and carries a cone 17 which is fixed to the carrier by means of a nut 18 and a bullet 19 incorporating electrical heaters 20 with thermal sensors (not shown).

The free end of the nozzle member 2 is screwed into a caliper 21 defining together with the cone 17 an annular extrusion orifice of diminishing interior dimensions through which the extrudate can flow uninterruptedly and form a parison of the produced tubing within the caliper 21 and around the cone 17. The conical surface of the cone 17 has a generatrix forming an angle of more than 45° with the longitudinal axis of the head.

The threaded member 6 is represented by a nut and adjusts the carrier 5 longitudinally, which is effective to vary the size of the extrusion orifice when the carrier is axially displaced by rotating the nut on the free threaded end of the carrier 5. The nut is held in place by means of its flange 23 and a cap 24 fixed to the flange 14 with circumferentially disposed screws 25. Such a structure allows the rotation of the nut without its axial displacement.

The coupling means is represented by a key 26, interconnects the carrier 5 and the mandrel member 3 and allows only the axial, without rotation, movement of the carrier 5.

As already mentioned, the particular embodiment of this invention is adapted for the production of externally ribbed tubing, for which a tubular mold cavity is formed by a series of forwardly moving molds 28 described, for example, in the patent No. 4 510 013 (the mentioned patents employ similar molds).

In operation, an extrudate of an expandable plastic material flows from the extruder uninterruptedly through the passage between the nozzle 4 and the mandrel 7 to the extrusion orifice to form the externally ribbed tubing 30 conforming to the wall of the tubular mold cavity.

## Claims

1. An extrusion die for an apparatus producing seamless plastic tubing, particularly, with a smooth inner surface and an annularly ribbed outer surface defined by alternating ribs and grooves, including
an extrusion head (1) having a central bore with an opening (8) for receiving an extrudate of a thermoplastic material under pressure therefrom,
an elongate nozzle (4) attached to said head and providing a supply passage extending in the longitudinal direction thereof for the delivery of said extrudate to the delivery end thereof,
a hollow mandrel (7) placed in said bore in substantially coaxial relation with said nozzle (4) and spaced from the latter to provide a plastic conducting passage extending in the longitudinal direction thereof for the delivery of said extrudate to the delivery end thereof, the nozzle (4) and mandrel (7) defining respectively an annular extrusion orifice of diminishing interior dimensions, through which the extrudate can flow uninterruptedly and form a parison within the nozzle and around the mandrel, characterized in that the mandrel (7) at said delivery end has a coaxial conical portion with its generatrix forming an angle of 34° and more with the longitudinal axis of said head (1), the outer diameter of the mandrel (7) at said end being not less than that of the nozzle (4).

2. The die according to claim 1 characterized in that the delivery end has an electrical heater (20) incorporated inside the mandrel (7).

3. The die according to claim 1 or 2 characterized by a centering means mounting the nozzle (4) uniformly spaced around the mandrel (7) and having screws (16) disposed in the head (1) radially, interacting with the lateral surface of the nozzle (4) and permitting the radial adjustment of the nozzle (4) with respect to the mandrel (7).

4. The die according to claims 1 to 3 characterized by a threaded adjusting member (6) for adjusting longitudinally the mandrel (7), effective to vary the size of the extrusion orifice when the mandrel (7) is axially adjusted.

5. The die according to claim 4, characerized by a coupling means, such as a key (26), spline and the like, interconnecting the mandrel (7) and the head (1) and allowing only the axial, without rotation, movement of the mandrel (7).

## Patentansprüche

1. Extruderdüse für eine Vorrichtung zur Herstellung nahtloser Kunststoffrohre, insbesondere mit einer glatten Innenfläche und einer ringförmig gerippten Außenfläche, die durch alternierende Rippen und Nuten gebildet ist, mit
einem Extruderkopf (1), der eine zentrale Bohrung mit einer Öffnung (8) zur Aufnahme eines Extrudats aus einem thermoplastischen Material unter Druck aufweist, einer langgestreckten Düse (4), die an dem Extruderkopf angebracht ist und einen sich in Längsrichtung erstreckenden Zulieferungskanal für die Zuführung des Extrudates zum Abgabeende der Düse bildet,
einem hohlen Dorn (7), der in der Bohrung im wesentlichen koaxial zur Düse (4) und im Abstand von dieser angeordnet ist, um einen sich in Längsrichtung erstreckenden Kunststoff-Zuführungskanal zur Zuführung des Extrudates zum Abgabeende zu bilden, wobei die Düse (4) und der Dorn (7) eine ringförmige Extruderöffnung mit sich verringernden inneren Abmessungen bildet, durch die das Extrudat ununterbrochen fließen und innerhalb der Düse und um den Dorn herum eine Wandung bilden kann, dadurch gekennzeichnet, daß der Dorn (7) am Abgabeende einen koaxialen, konischen Bereich aufweist, dessen Erzeugende mit der Längsachse des Extruderkopfes (1) einen Winkel bildet, der größer oder gleich 45° ist, und daß der äußere Durchmesser des Dorns (7) am Abgabeende nicht kleiner ist als derjenige der Düse (4).

2. Extruderdüse nach Anspruch 1, dadurch gekennzeichnet, daß das Abgabeende eine elektrische Heizvorrichtung (20) aufweist, die innerhalb des Dorns (7) angeordnet ist.

3. Extruderdüse nach Anspruch 1 oder 2, gekennzeichnet durch eine Zentrierungseinrichtung, mit der die Düse (4) mit gleichmäßigem Abstand um den Dorn (7) herum angebracht ist und die radial im Extruderkopf angeordnete Schrauben (16) aufweist, die mit der seitlichen Oberfläche der Düse (4) zusammenwirken und eine radiale Einstellung der Düse (4) in Bezug auf den Dorn (7) ermöglichen.

4. Extruderdüse nach einem der Ansprüche 1 bis 3, gekennzeichnet durch eine mit einem Gewinde versehene Einstellvorrichtung (6) zur longitudinalen Einstellung des Dorns (7), wodurch die Größe der Extruderöffnung variierbar ist, wenn der Dorn (7) axial eingestellt wird.

5. Extruderdüse nach Anspruch 4, gekennzeichnet durch eine Kupplungseinrichtung, wie einen Keil (26), eine Feder oder dergleichen, die den Dorn (7) und den Extruderkopf (1) zusammenschließt und nur eine axiale Bewegung des Dorns (7) ohne dessen Drehung erlaubt.

**Revendications**

1. Filière d'extrusion pour un dispositif produisant des tuyauteries plastiques sans soudure, particulièrement, avec une surface intérieure lisse et une surface extérieure nervurée de manière annulaire définie par une alternance de nervures et de rainures, comprenant
une tête d'extrusion (1), comportant un alésage central avec une ouverture (8) pour recevoir par celle-ci un extrudat d'un matériau thermoplastique sous pression,
une buse allongée (4) fixée à ladite tête et procurant un passage d'alimentation s'étendant dans le sens longitudinal de celle-ci pour amener ledit extrudat à l'extrémité de sortie de celle-ci,
un mandrin creux (7) placé dans ledit alésage en position pratiquement co-axiale avec ladite buse (4) et écarté de cette dernière pour procurer un conduit conduisant le plastique et s'étendant dans le sens longitudinal de celui-ci pour amener ledit extrudat à l'extrémité de sortie de celui-ci, la buse (4) et le mandrin (7) définissant respectivement un orifice d'extrusion annulaire de dimensions intérieures allant en diminuant, à travers lequel l'extrudat peut fluer d'une manière ininterrompue et former une paroi à l'intérieur de la buse et autour du mandrin, caractérisé en ce que le mandrin (7) à ladite extrémité de sortie comporte une partie conique co-axiale dont la génératrice forme un angle de 45° et plus avec l'axe longitudinal de ladite tête (1), le diamètre extérieur du mandrin (7) à ladite extrémité n'étant pas plus petit que celui de la buse (4).

2. Filière selon la revendication 1, caractérisée en ce que l'extrémité de sortie comporte un réchauffeur électrique (20) incorporé à l'intérieur du mandrin (7).

3. Filière selon la revendication 1 ou 2, caractérisée par des moyens de centrage plaçant la buse (4) écartée de manière uniforme autour du mandrin (7) et comportant des vis (16) disposées dans la tête (1) de manière radiale, agissant sur la surface latérale de la buse (4) et permettant le réglage radial de la buse (4) par rapport au mandrin (7).

4. Filière selon les revendications 1 à 3, caractérisée par un élément de réglage fileté (6) pour régler le mandrin (7) longitudinalement, efficace pour modifier la taille de l'orifice d'extrusion lorsque le mandrin (7) est réglé, axialement.

5. Filière selon la revendication 4, caractérisée par des moyens d'accouplement, tels qu'une clavette (26), un ergot et quelque chose de similaire, reliant le mandrin (7) et la tête (1) et permettant seulement le mouvement axial du mandrin (7), sans rotation.